# EUROPEAN PATENT APPLICATION

(11) **EP 4 292 989 A1**
(43) Date of publication of application: **20.12.2023**
(21) Application number: 22752380.0
(22) Date of filing: 02.02.2022
(51) Int. Cl.: C02F 1/48, B08B 13/00, D06F 39/08

(54) **DEVICE FOR WATER TREATMENT IN WASHING MACHINES**

(30) Priority: 11.02.2021 WO PCT/ES2022/070051
(71) Applicant: Protectores Hidromagneticos S.L., 28043 Madrid (ES)
(72) Inventor: LAZARO VAZQUEZ, Francisco, 28043 Madrid (ES)
(74) Representative: Gonzalez Palmero, Fé
(86) International application number: PCT/ES2022/070051
(87) International publication number: WO 2022/171916

(57) **Abstract**

Water treatment device for washing machines, such as laundry machines or dishwashers, comprising two bodies holding magnets (1-1') that are arranged facing each other inside a housing (4), with said bodies comprising opposing faces that repel each other and with said faces having a concave surface (2) that can be adjusted to the water inlet pipe (3) of a washing machine, with the housing (4) being open on both ends thereof and comprising a "C" profile defining a front opening (5) for inserting the pipe (3), with the bodies holding the magnets (1-1') comprising respective half-collars (9) on the front and rear ends thereof wherein adjusting elements are inserted in order to define means for adjusting the vertical distance between said magnets; and with said device being complemented by a reformulated cleaning detergent.

## Description

### FIELD OF THE ART

The present invention refers to a water treatment device, more specifically a device designed to reduce water pollution, particularly the water containing detergent used in washing machines such as laundry machines and dishwashers.

The object of the invention is to replace some of the chemical products contained in detergents, which are known as surfactant and adjuvant tensioactive agents, using a magnetic device that reduces the surface tension of water to 42 dyne per square centimetre, less than half its original value, which prevents water from becoming polluted during the process of washing clothes or crockery.

### BACKGROUND OF THE INVENTION

It is commonly known that water and salts are two of the key elements that magnetic fields exert an influence upon by modifying many of their characteristics and turning chemically hard water into physically soft water.

Water is known to be an unlimited association of molecules joined together by hydrogen bonds. In terms of their physical configuration, water molecules have a triangular structure comprising an oxygen anion (O=) and two cations (H+).

The atoms formed by said molecule are arranged asymmetrically, which means the charges are also distributed asymmetrically, wherein the areas closer to the more electronegative atom (O=) have a higher electron density than the areas closer to the more electropositive atom (H+). This results in a dipole molecule, which is essentially a magnet.

Therefore, water molecules - i.e., dipoles - have a permanent dipole moment and can align along a magnetic field, which substantially increases the polarisation of the liquid. This alignment is possible due to the nature of the hydrogen bonds being exclusively electrostatic, which makes them flexible and thus capable of deforming. This increase in polarity implies an increase in the solubility of the water treated with magnetic devices, which helps to dissolve the salts into the body of the water, to the extent of practically becoming a true solution.

Therefore, when it comes to the surface tension of the liquid, the molecules inside the liquid, which are in a state of significant disarray, are subjected to attractive forces, while the surface molecules are subjected to attractive forces pulling them inside the water, which tends to reduce the length of said of surface area as much as possible. When this water is spilled, it creates countless drops.

The surface tension of the water is of 74 dyne/cm2 at 18° degrees, which causes a capillary rise of 15 cm in a 0.1 mm diameter tube. If a needle is placed gently over the water, it does not sink into it.

Magnetic fields increase the polarity of water by rearranging the charges, and they also increase the solubility thereof by decreasing the attractive forces of the entire assembly, which means that magnetic fields act as tensioactive agents. The surface tension of water treated magnetically is reduced to 42 dyne/cm2.

This system of water treatment is a physical process.

No salts are eliminated, the crystalline structure of polymorphic salts is broken, and calcite crystals are converted into aragonite dust.

The polarisation and reorientation of the ions in the salts increases the number of nuclei created by crystallisation, and it is evident that the higher number of nuclei created by crystallisation, the lower the size of the crystals.

Regarding detergents, these are comprised by tensioactive glauberite (sodium calcium sulphate Na₂Ca(SO₄)₂ and other chemical products). These are synthetic tensioactive compounds, with commercial products including the following active components: surfactants and adjuvants. Surfactants reduce the surface tension of elements, which gives them capacity to clean materials. There are numerous types of surfactants:
- Anionic surfactants: alkyl benzene sulfonates (ABS), which are not very biodegradable and have been replaced.
- Non-ionic surfactants: products based on alkylphenols.
- Cationic surfactants: quaternary ammonium salts.
- Adjuvants: polyphosphates, carbonates, silicates, perborates, alkylamides, etc.

These products can be damaging in a series of ways, some of which include:
- Foam formation in rivers, which stops the natural processes of filtration.
- Reduction of oxygen absorption from the atmosphere.
- Increase in phosphate content, which promotes the eutrophication of lakes and the growth of plankton in rivers.
- Gradual increase in boron content of surface and deep waters.

### EXPLANATION OF THE INVENTION

The water treatment device described completely solves the drawback mentioned above with a simple but effective solution.

To do so, the invention aims to replace the chemical products of conventional detergents, which are required to significantly reduce the surface tension of the water used for washing, with the application of clean energy during a limited amount of time and at a minimum cost, thus preventing both surface and deep-water pollution, and protecting the environment.

Using a basic product such as glauberite (sodium calcium sulphate) and applying a high power (in gauss) magnetic field can replace the use of all types of surfactants, which are the polluting and expensive components used to manufacture detergents, both for washing machines and dishwashers.

The present invention will cause detergents to be reformulated, also making redundant the use of anti-scaling products. Magnetic fields convert calcite into aragonite dust that is not adherent.

More specifically, the device of the invention is placed outside the washing device, axially to the water inlet pipe, in order to apply a magnetic field with a power of about 1,500 gausses to the flow of incoming water.

In order to do so, the device of the invention is comprised of a pair of bodies holding powerful magnets that, due to the enormous repelling force generated between them, are placed inside a housing that significantly facilitates the placement thereof.

More specifically, the magnets are located inside a body with a surface that can be adapted to the concave surface of a tube, with the opposite end thereof comprising a prismatic configuration matching the internal geometry of the housing so that it can slide vertically along said housing.

In this regard, the housing will have a "C" section so that it is completely open on the front and the sides, with the corresponding stops on one of the side faces thereof, in order to insert the two bodies containing the magnets on the opposite end that comprises a front access for inserting the pipe or water inlet once the magnets have been placed.

In this way, the upper and lower walls of the housing will prevent the bodies holding the magnets from separating further than the height of the housing, with said bodies leaving a space between them that makes it possible to axially adjust the assembly to a pipe, with said elements comprising respective half collars on the front and rear ends thereof wherein adjusting elements such as flanges are inserted, which make it possible to stabilise and bring closer together the two bodies so they are closer to the pipe or inlet in order to maximise the magnetic field created on said pipe or inlet.

For this purpose and to ensure that the stability of the two bodies holding the magnets is improved and they can be guided more accurately, the housing comprises a vertical guide corresponding to the area opposite the front opening thereof, which coincides with the grooved recesses on the sides of the two bodies, making it easier to guide the housing along the vertical axis and preventing the bodies holding the magnets from coming out of the housing.

As explained above, combining the water duly treated with the device of the invention with conventional detergents, which have had the products used to decrease the surface tension of water removed, will make it possible to decrease the pollution of wastewater coming out of devices such as laundry machines or dishwashers. Ultimately, the composition of the detergents is to be reformulated.

This makes it possible to obtain an extremely ecological device that represents a much cleaner and affordable solution than the cleaning and filtration systems used currently, thus promoting environmental sustainability.

### BRIEF DESCRIPTION OF THE DRAWINGS

To complete the invention described below and in order to give a better understanding of the characteristics of the invention, according to a preferred embodiment thereof, this description is accompanied by a set of drawings in which the figures described below have been represented, for purely illustrative purposes and should not be construed as limiting:
Figure 1.- Shows a perspective view of the main body of a water treatment device designed according to the object of the present invention.
Figure 2.- Shows a similar view as the one shown in figure 1, wherein the device is partially assembled.

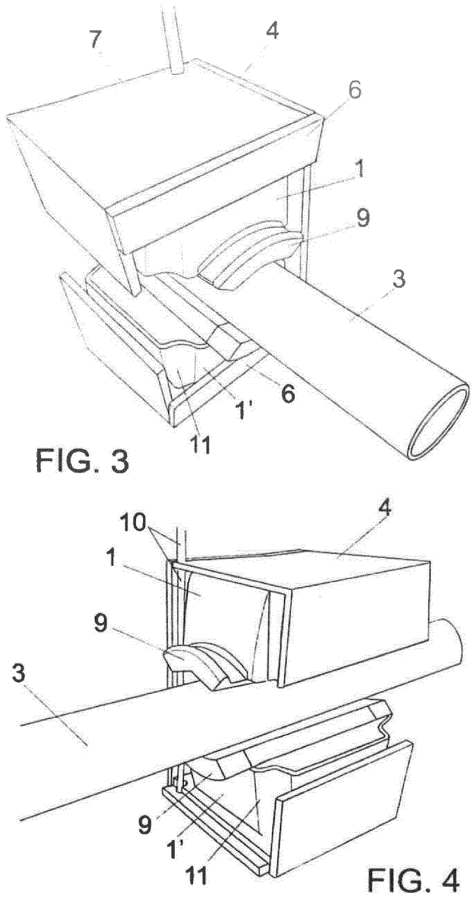

Figure 3.- Shows a similar view as the one shown in figures 1 and 2, wherein the device is duly assembled and mounted on the corresponding pipe.
Figure 4.- Shows an opposite perspective view of the assembly shown in figure 3.

### PREFERRED EMBODIMENT OF THE INVENTION

The aforementioned figures show how the device of the invention is comprised of two bodies holding two magnets (1-1') with a joint magnetic power of 1,500 gauss, which have an essentially prismatic configuration with opposing faces that repel each other, with said sides comprising a concave surface (2) that can be adjusted to the pipe (3) transferring the water to be treated.

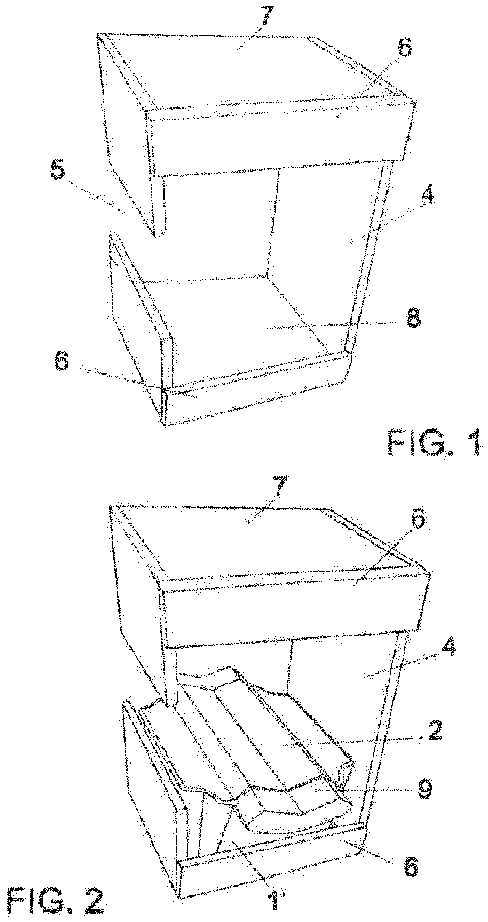

As explained above, due to the enormous repelling force generated between the two bodies holding the magnets (1-1'), these are complemented by a housing (4), shown in figure 1, that is open on both ends along the length of the pipe (3) transferring the water to be treated and that comprises upper and lower stops (6) on one of the ends thereof in order to prevent the bodies holding the magnets from coming out of the housing after being inserted therein, so that when the device is first assembled, the bodies holding the magnets will tend to separate up to the maximum vertical distance allowed by the housing (4), with said movement being limited by the upper (7) and lower (8) base of the housing (4), leaving a space between them that, together with the front opening (5) defining the throttled "C" profile of the housing, make it possible to axially arrange the assembly along the water pipe (3).

According to another essential characteristic of the invention, the bodies holding the magnets (1-1') comprise respective half collars (9) on the front and rear ends thereof wherein adjusting elements such as flanges are inserted and tightened in order to reduce the vertical distance between said magnets, so they can be adjusted to the outer surface of the pipe (3).

As explained above, once the pipe has been axially inserted in the housing, the magnets will be brought closer together using flanges. The housing comprises a vertical guide (10) corresponding with the opposite part of the front opening thereof, which coincides with the grooved recesses (11) designed on the sides of the two bodies holding the magnets, thus making it easier to guide them along the vertical axis and preventing them from coming out of the housing.

The way the device is structured makes it possible to use a detergent without tensioactive agents as cleaning products in washing machines that use pipes (3) transferring water treated by the device, which significantly decreases the pollution caused by the wastewater of said washing machine.

## Claims

1. Water treatment device for washing machines, such as laundry machines or dishwashers, **characterised in that** it is comprised of two bodies holding magnets (1-1') that can be moved vertically and in opposing directions inside a housing (4), with said bodies comprising opposing faces that repel each other and a concave surface (2) that can be adjusted to the water inlet pipe (3) of a washing machine, with the housing (4) being open on both ends thereof along the length of the pipe (3) transferring the water to be treated and comprising a throttled "C" profile defining a front opening (5) for inserting the pipe (3), with the bodies holding the magnets (1-1') comprising respective half-collars (9) on the front and rear ends thereof wherein elements such as flanges are inserted in order to define means for adjusting the vertical distance between said magnets; and with said device being complemented with a reformulated detergent that is used as a cleaning product for washing machines being supplied with water that goes through the water pipe (3).

2. Water treatment device for washing machines according to claim 1, **characterised in that** the housing (4) comprises a vertical guide (10) that can be plugged into the housing in correspondence with the area opposite the front opening (5) thereof, so that the bodies holding the magnets (1-1') can be moved vertically along the grooved recesses (11) thereof.

3. Water treatment device for washing machines according to claim 1, **characterised in that** the bodies holding the magnets (1-1') have a joint magnetic power of about 1,500 gauss.

4. Water treatment device for washing machines according to claim 1, **characterised in that** the housing (4) comprises upper and lower stops (6) on one of the ends thereof in order to prevent the bodies holding the magnets from coming out of the housing, once they have been inserted therein.
